# FASCICULE DE BREVET EUROPEEN

(11) **EP 2 815 583 B1**
(45) Date de publication et mention de la délivrance du brevet: **23.10.2019**
(21) Numéro de dépôt: 13710447.7
(22) Date de dépôt: 11.02.2013
(51) Int. Cl.: H04N 21/472, H04N 21/61, H04N 21/41, H04N 21/658, H04N 21/4782, H04N 21/81

(54) **NAVIGATION DEPORTÉE**
SURFEN MIT ZUSÄTZLICHEM GERÄT
BROWSING FROM AN ADDITIONAL DEVICE

(30) Priorité: 16.02.2012 FR 1251455
(43) Date de publication de la demande: 24.12.2014
(73) Titulaire: TDF, 92120 Montrouge (FR)
(72) Inventeur: BEAUCHAMP, Frédéric, F-35530 Noyal Sur Vilaine (FR); VINCENT, David, F-35150 Amanlis (FR)
(74) Mandataire: Cabinet Plasseraud
(86) Numéro de dépôt international: PCT/FR2013/050276
(87) Numéro de publication internationale: WO 2013/121135

(56) Documents cités:
- EP-A2- 2 293 562
- US-A1- 2003 139 980
- US-A1- 2008 155 613
- US-A1- 2011 119 147
- "Amazon Video On Demand Frequently Asked Questions - Sony Bravia TV", , 29 janvier 2010 (2010-01-29), XP055025329, Extrait de l'Internet: URL:http://web.archive.org/web/20100129181 902/http://www.amazon.com/gp/help/customer /display.html?nodeId=3748&; http://web.archive.org/web/20090421023105/ http://www.amazon.com/gp/video/ontv/bravia ; http://web.archive.org/web/20100110072336/ http://www.amazon.com/gp/help/customer/dis play.html?nodeId=20023 [extrait le 2012-04-23]

## Description

La présente invention concerne le domaine du traitement de contenus numériques.

Elle concerne plus précisément des applications de vidéos à la demande et plus généralement l'achat de contenus numériques en ligne.

La présente invention trouve des applications dans des terminaux permettant la visualisation de tels contenus, et en particulier des terminaux compatibles avec le standard HbbTV (pour « Hybrid broadcast broadband TeleVision » en anglais). Le standard HbbTV, dont la version 1.1.1 a été approuvée par l'ETSI (« European Télécommunications Standards Institute ») sous la référence ETSI TS 102 796 en juin 2010, permet de combiner des services télédiffusés (« broadcast » en anglais) avec des services via larges bandes (« broadband » en anglais) et permet en outre un accès à Internet pour les utilisateurs de terminaux connectés.

De nos jours, les dispositifs d'affichage de contenus numériques tels que des téléviseurs accèdent généralement à des flux numériques de données via un point d'accès réseau, pouvant être un point d'accès en filaire ou sans fil, tel qu'une Box ADSL par exemple, permettant de réunir une pluralité de fonctionnalité (accès aux chaînes TNT, téléphonie, Internet, accès à des serveurs de vidéo à la demande).

Ainsi, il est désormais possible d'accéder à des contenus numériques stockés sur des serveurs accessibles par Internet via une télévision reliée à un point d'accès réseau.

Dans le cas des téléviseurs, la navigation s'effectue alors au moyen d'une télécommande. Cependant, l'utilisation d'une télécommande pour parcourir des contenus, pour entrer une suite de lettres ou de chiffres afin de rechercher un contenu ou encore pour effectuer un paiement sécurisé requiert un temps considérable pour l'utilisateur. L'ergonomie associée à ces utilisations est donc restreinte.

Ainsi, il existe un besoin de permettre une sélection aisée de contenus numériques stockés sur un serveur distant pour une visualisation sur un téléviseur.

Le document US 2011/119147 concerne un dispositif client de type téléphone mobile avec lequel un utilisateur se connecte à une serveur en fournissant un identifiant (login) et un mot de passe pour acheter du contenu sur un serveur. L'utilisateur se connecte à son téléviseur avec le même identifiant et le même mot de passe pour utiliser le même contenu sans avoir à payer une seconde fois.

Le document US 2008/155613 concerne un dispositif client de type ordinateur avec lequel un utilisateur se connecte à un serveur web pour commander du contenu vidéo à la demande. La liste de fichiers loués par l'utilisateur est mise à jour sur le décodeur numérique. L'utilisateur, depuis son ordinateur, envoie une requête au serveur afin que du contenu soit transmis par ce dernier en flux au décodeur numérique. Le serveur stocke une association entre le compte utilisateur et l'identifiant de décodeur numérique. Le document adresse l'avantage de l'utilisation d'une interface web au lieu de l'interface primitive d'un décodeur numérique.

Le document XP055025329, "Amazon Video On Demand Frequently Asked Questions - Sony Bravia TV" concerne le service Amazon Instant Video. L'utilisateur navigue et achète des programmes HD télévisés sur le site Amazon.com en utilisant un PC ou tout autre appareil compatible. Les programmes sont ensuite accessibles dans la bibliothèque de l'utilisateur "Your Video library" pour être visionnés depuis un PC ou une télévision connectée compatible.

La présente invention vient améliorer la situation.

Un premier aspect de l'invention concerne un procédé de traitement d'un contenu numérique, mis en oeuvre dans un serveur d'un réseau de communication. Le procédé comprend :
- sur réception d'une requête d'un dispositif de navigation comprenant un premier identifiant de contenu et un premier identifiant d'utilisateur, stocker dans une base de données le premier identifiant de contenu en association avec le premier identifiant d'utilisateur ;
- sur réception d'une requête d'interrogation issue d'un dispositif d'affichage et comprenant un identifiant d'utilisateur, comparer l'identifiant d'utilisateur avec le premier identifiant d'utilisateur ;
- si l'identifiant d'utilisateur correspond au premier identifiant d'utilisateur, transmettre au dispositif d'affichage le contenu numérique associé au premier identifiant de contenu, pour un affichage du contenu numérique par le dispositif d'affichage.

Ainsi, un utilisateur peut utiliser un dispositif de navigation distinct d'un dispositif d'affichage, tel qu'un téléviseur, afin d'accéder à un contenu numérique, le contenu numérique pouvant être transmis par un serveur ultérieurement au téléviseur. L'invention permet ainsi de découpler la fonction de recherche d'un contenu numérique (et de paiement) de la fonction de visualisation, afin d'utiliser des dispositifs dont l'ergonomie est adaptée à l'une de ces fonctions. On entend par dispositif de navigation tout moyen d'accès à un serveur en ligne (via Internet par exemple), tel qu'une tablette numérique, un PDA (pour « Personal Digital Assistant » en anglais), un ordinateur portable ou fixe, ou encore un téléphone mobile. Ces dispositifs de navigation sont adaptés pour faciliter la sélection d'un contenu, le parcours de contenus, le paiement en ligne ainsi que la saisie de caractères alphanumériques. On entend par dispositif d'affichage, tout dispositif dont l'une des fonctions est d'afficher des contenus numériques, tels qu'un téléviseur ou un vidéoprojecteur par exemple. Le contenu numérique peut ainsi être stocké en association avec un identifiant d'utilisateur, pouvant comprendre un login (adresse email, nom) et un mot de passe par exemple, afin d'être transmis ultérieurement à un dispositif d'affichage apte à fournir cet identifiant. On entend par contenu numérique tout contenu multimédia tel qu'un fichier audio ou un fichier vidéo par exemple.

Selon certains modes de réalisation de l'invention, le dispositif d'affichage est compatible HbbTV et le procédé comprend initialement :
- recevoir par le dispositif d'affichage un flux de données d'un réseau hertzien comprenant une application HbbTV associée au serveur ou comprenant une URL permettant d'accéder à l'application HbbTV via un réseau IP;
- exécuter l'application HbbTV dans le dispositif d'affichage.
La requête d'interrogation peut être reçue régulièrement par le serveur depuis le dispositif d'affichage.

Ces modes de réalisation permettent de tirer profit des fonctionnalités d'applications HbbTV qui sont généralement transmises avec un flux Hertzien dédié à une chaîne de télévision par exemple. Ainsi, une application HbbTV associée à une chaîne de télévision donnée, peut accéder à un serveur associé à cette chaîne et fournissant des services de contenus numériques à la demande. De plus, une grande partie des dispositifs d'affichage tels que des téléviseurs sont désormais compatibles HbbTV. Selon ces modes de réalisation, le serveur peut ainsi être interrogé afin de savoir si l'utilisateur du téléviseur a acquis des droits associés à un contenu numérique en vue d'un rendu de ce contenu numérique sur le dispositif d'affichage.

En complément, la requête d'interrogation est reçue régulièrement selon une première fréquence donnée.

Ainsi, le serveur est consulté régulièrement selon une fréquence qui peut dépendre d'une plage horaire en cours ou encore d'habitudes de l'utilisateur.

En complément, sur détection par le serveur d'une connexion du dispositif de navigation au serveur via le réseau de communication, le procédé comprend l'envoi au dispositif d'affichage par le serveur d'une notification de connexion du dispositif de navigation, et, sur envoi de la notification de connexion, la requête d'interrogation est reçue selon une seconde fréquence donnée, la seconde fréquence étant supérieure à la première fréquence.

Ainsi, lorsque l'utilisateur accède en ligne au serveur stockant les contenus numériques via le dispositif de navigation, la fréquence de consultation par le dispositif d'affichage exécutant l'application HbbTV peut être accrue dans la mesure où un contenu numérique est susceptible d'être acheté par l'utilisateur.

Selon certains modes de réalisation, le procédé comprend en outre, sur réception de la requête d'interrogation du dispositif d'affichage et si aucun identifiant de contenu ne correspond à l'identifiant d'utilisateur, transmettre au dispositif d'affichage une réponse indiquant qu'aucun contenu ne correspond à l'identifiant d'utilisateur.

Selon certains modes de réalisation, la transmission au dispositif d'affichage du contenu numérique est conditionnée par la réception du serveur d'une requête de lecture émise par le dispositif de navigation, la requête de lecture comprenant le premier identifiant d'utilisateur et le premier identifiant de contenu.

Ces modes de réalisation permettent de requérir un contenu numérique grâce au dispositif de navigation, pour une visualisation ultérieure du contenu sur le dispositif d'affichage. Ainsi, dans le cas où l'utilisateur est situé loin de son domicile comprenant le dispositif d'affichage, il peut tout de même acquérir le contenu numérique par anticipation, pour le visualiser une fois rentré chez lui, par simple envoi d'une requête de lecture depuis le dispositif de navigation.

Selon certains modes de réalisation, le dispositif d'affichage est un téléviseur. En variante, le dispositif d'affichage peut comprendre un téléviseur et un décodeur numérique (TNT par exemple) dédié, dans lequel est exécutée l'application HbbTV.

Un deuxième aspect de l'invention concerne un programme d'ordinateur comportant des instructions pour la mise en oeuvre du procédé selon le premier aspect de l'invention, lorsque ce programme est exécuté par un processeur.

Un troisième aspect de l'invention se rapporte à un serveur d'un réseau de communication pour le traitement d'un contenu numérique, comprenant :
- une unité de réception d'une requête d'un dispositif de navigation comprenant un premier identifiant de contenu et un premier identifiant d'utilisateur
- une base de données pour stocker le premier identifiant de contenu en association avec le premier identifiant d'utilisateur ;
- une unité de réception d'une requête d'interrogation d'un dispositif d'affichage comprenant un identifiant d'utilisateur;
- une unité de comparaison pour comparer l'identifiant d'utilisateur avec le premier utilisateur ;
- une unité de transmission pour transmettre le contenu numérique associé au premier identifiant de contenu, pour un affichage du contenu numérique sur le dispositif d'affichage, si l'identifiant d'utilisateur correspond au premier identifiant d'utilisateur ;
   la requête d'interrogation étant reçue régulièrement selon une première fréquence donnée par le serveur depuis le dispositif d'affichage.

Un quatrième aspect de l'invention concerne un dispositif pour requérir un contenu numérique auprès d'un serveur d'un réseau de communication, le dispositif étant compatible HbbTV et comprenant :
- une unité de réception d'un flux de données d'un réseau hertzien comprenant une application HbbTV associée à un serveur ou comprenant une URL permettant d'accéder à ladite application HbbTV via un réseau IP;
- une unité d'exécution de l'application HbbTV ;
- une unité d'émission régulière selon une première fréquence donnée d'une requête d'interrogation vers le serveur ladite requête d'interrogation comprenant un identifiant d'utilisateur ;
- une unité de réception pour recevoir un contenu numérique associé dans le serveur avec l'identifiant d'utilisateur.

Un cinquième aspect de l'invention concerne un système pour le traitement d'un contenu numérique, comprenant un dispositif selon le quatrième aspect de l'invention et un serveur selon le troisième aspect de l'invention.

D'autres caractéristiques et avantages de l'invention apparaîtront à l'examen de la description détaillée ci-après, et des dessins annexés sur lesquels:
- la figure 1 représente un système pour le traitement d'un contenu numérique selon certains modes de réalisation de l'invention;
- la figure 2 illustre un diagramme d'étapes selon certaines modes de réalisation de l'invention, entre un dispositif d'affichage, un serveur et un dispositif de navigation ;
- la figure 3 illustre un diagramme d'étapes selon d'autres modes de réalisation de l'invention, entre un dispositif d'affichage, un serveur et un dispositif de navigation.

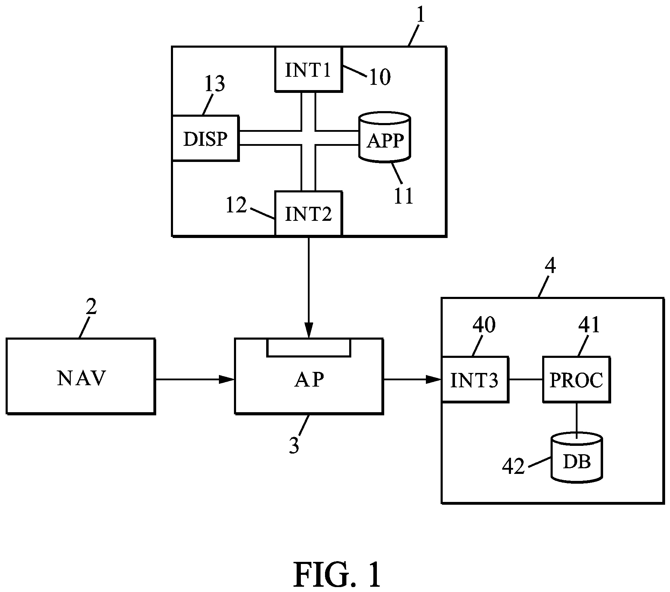

En référence à la figure 1, un système de traitement d'un contenu numérique selon certains modes de réalisation de l'invention comprend un dispositif d'affichage 1, un dispositif de navigation 2, un point d'accès réseau 3 ainsi qu'un serveur 4.

Le dispositif d'affichage 1 peut être un téléviseur, un vidéoprojecteur un téléphone portable, une tablette numérique ou un ordinateur fixe ou portable. Dans ce qui suit, l'exemple d'un téléviseur est considéré.

Le téléviseur 1 comprend une interface Hertzienne 10, une unité de stockage d'applications 11, une interface 12 ainsi qu'une unité d'affichage 13, telle qu'un écran. En variante, le dispositif d'affichage peut comprendre un téléviseur intégrant uniquement l'unité d'affichage 13 ainsi qu'un décodeur numérique dédié intégrant l'interface Hertzienne 10, l'unité de stockage d'applications 11 et l'interface 12. On note ainsi que l'exemple du téléviseur 1 utilisé dans ce qui suit ne restreint aucunement la portée de l'invention à l'implémentation des fonctionnalités du téléviseur 1 dans un dispositif unique.

L'interface Hertzienne 10 permet au téléviseur 1 la réception de chaînes de télévision numérique, telles que des chaînes de la TNT (Télévision Numérique Terrestre) par exemple.

Le point d'accès réseau 3 permet au téléviseur 1 et au dispositif de navigation 2 un accès à un réseau tel qu'un réseau IP et ainsi l'accès à des contenus numériques pouvant être stockés dans une pluralité de serveurs. Par souci de simplicité, un seul serveur 4 a été représenté sur la figure 1. Un serveur peut être dédié à une chaîne de télévision numérique donnée par exemple. Le serveur 4 peut être accessible via le protocole HTTP et le langage HTML. Dans ce cas, le dispositif de navigation 2 peut être tout type de dispositif compatible HTML.

Il est à noter que dans l'exemple représenté en figure 1, le dispositif de navigation 2 et le téléviseur 1 accèdent au réseau et communiquent avec le serveur via un unique point d'accès réseau 3. Cependant, le dispositif de visualisation 2, qui est typiquement un dispositif portable tel qu'une tablette numérique, un téléphone ou un PDA, peut accéder au serveur via un point d'accès réseau autre que le point d'accès réseau 3.

Ainsi, un utilisateur du dispositif de navigation 2 peut accéder à un ensemble de contenus numériques stockés dans le serveur 4, parcourir ces contenus, rechercher un contenu numérique donné, et procéder à l'achat (par paiement sécurisé par exemple) de l'un de ces contenus. A cet effet, sur connexion du dispositif de navigation 2 au serveur 4, le serveur envoie des pages HTML au dispositif de navigation 2 contenant une présentation de contenus numériques disponibles. L'utilisateur peut ainsi naviguer grâce au dispositif de navigation 2 parmi les pages qui lui sont proposées pour choisir un contenu numérique. L'utilisateur peut également visualiser une bande-annonce dans le cas d'un contenu vidéo, ou écouter un extrait dans le cas d'un contenu audio.

Le téléviseur 1 peut également accéder au serveur 4 afin de parcourir les contenus. Cependant, comme détaillé précédemment, le parcours des contenus numériques, la sélection et le paiement sont compliqués par l'emploi d'une télécommande en tant qu'interface utilisateur entre un utilisateur et le téléviseur 1.

Il est à noter que le dispositif de navigation peut communiquer avec la le point d'accès réseau 3 relié au réseau comprenant le serveur 4 via tout moyen connu, tel qu'une interface Wi-Fi ou une interface filaire par exemple.

L'achat d'un contenu numérique depuis le dispositif de navigation 2 peut requérir la transmission vers le serveur 4 d'un identifiant d'utilisateur ainsi que d'un identifiant de contenu. L'identifiant d'utilisateur peut comprendre un login (adresse email, nom, adresse, pseudonyme) ainsi qu'un mot de passe par exemple. L'identifiant d'utilisateur peut par ailleurs être associé à un compte TNT2.0 de l'utilisateur. L'identifiant d'utilisateur peut ainsi être du type UUID pour « Universally Unique Identifier », qui est normalisé par l'ISO/IEC 9834-8 :2008. L'identifiant d'utilisateur peut ainsi être reçu par le serveur 2 lors de la connexion du dispositif de navigation 2 au compte TNT2.0 de l'utilisateur. L'identifiant de contenu est alors reçu ultérieurement, sur sélection et/ou achat par l'utilisateur d'un contenu numérique grâce au dispositif de navigation 2.

Selon l'invention, le serveur 4 comprend une interface 40 pour la réception de l'identifiant d'utilisateur et de l'identifiant de contenu, une unité de traitement de données 41 ainsi qu'une base de données 42. L'identifiant d'utilisateur et l'identifiant de contenu peuvent être stockés en association par le serveur 4 dans la base de données 42. La base de données 42 peut par exemple être une base de données dédiée au compte TNT2.0 de l'utilisateur.

Le contenu numérique ainsi sélectionné et acheté peut alors être requis par le téléviseur 1 pour visualisation sur le téléviseur 1, comme détaillé ultérieurement.

Selon certaines réalisations de l'invention, le contenu numérique (ou une URL permettant d'accéder au contenu numérique) peut être transmis au téléviseur 1 uniquement lorsque le serveur 4 a reçu une requête de lecture du contenu numérique depuis le dispositif de navigation 2. La requête de lecture comprend l'identifiant d'utilisateur ainsi que l'identifiant du contenu sélectionné et/ou acheté précédemment. Ainsi, un utilisateur peut requérir par anticipation un contenu numérique grâce au dispositif de navigation 2, pour une visualisation ultérieure sur le téléviseur 1. Ces réalisations sont avantageuses dans le cas où l'utilisateur n'a pas un accès immédiat à son téléviseur (lorsqu'il est en déplacement par exemple) et qu'il souhaite tout de même acquérir immédiatement le contenu via le dispositif de navigation. Une fois que le téléviseur est à nouveau accessible, l'utilisateur peut envoyer une requête de lecture via le dispositif de navigation 2 afin de visualiser le contenu sélectionné ou acheté précédemment, sur le téléviseur 1.

L'utilisateur peut également accéder à des chaînes de télévision numérique via le téléviseur 1. A cet effet, le téléviseur 1 peut recevoir via l'interface Hertzienne 10, un flux de données permettant l'affichage de programmes d'une chaîne donnée. Ce flux de données peut comprendre une application HbbTV qui est propre à la chaîne actuellement en cours de visualisation et actuellement transmise dans le flux de données. En variante, le flux de données peut comprendre une URL permettant d'accéder à l'application HbbTV via le réseau IP. L'application HbbTV peut alors être exécutée dans la base de données d'application 11 de manière transparente pour l'utilisateur. Une telle application HbbTV permet au téléviseur 1 d'accéder à un serveur associé à la chaîne de télévision actuellement en cours de visualisation. Dans la suite de l'exposé, il est considéré que le serveur 4 sur lequel a été sélectionné ou acheté le contenu numérique grâce au dispositif de navigation est le serveur associé à la chaîne en cours de visualisation sur le téléviseur 1 de l'utilisateur.

L'application HbbTV installée dans la base de données d'application 11 peut envoyer une requête d'interrogation au serveur associé de manière régulière. La requête d'interrogation comprend l'identifiant d'utilisateur, tel que l'identifiant TNT2.0 précédemment détaillé. La requête d'interrogation permet d'interroger le serveur 4 afin de savoir si un contenu numérique a été sélectionné ou acheté par l'utilisateur identifié par l'identifiant d'utilisateur, autrement dit, afin de savoir si le serveur 4 stocke un identifiant de contenu numérique en association avec l'identifiant d'utilisateur dans sa base de données 42. A cet effet, le serveur reçoit par l'interface 40 la requête d'interrogation et l'unité de traitement de données 41 est apte à comparer l'identifiant d'utilisateur reçu avec les identifiants d'utilisateur stockés dans la base de données 42 en association avec des identifiants de contenus numériques.

Si un identifiant de contenu numérique est associé avec l'identifiant d'utilisateur reçu du téléviseur, alors le serveur 4 transmet via l'interface 43 l'URL (pour « Uniform Resource Locator » en anglais) du contenu numérique à lire au téléviseur 1, pour une visualisation au niveau de l'unité d'affichage 13. Selon certains modes de réalisation, la transmission de l'URL du contenu numérique au téléviseur 1 est conditionnée par la réception préalable de la requête de lecture du dispositif de navigation 2 précédemment décrite. En revanche, si aucun identifiant de contenu numérique n'est associé à l'identifiant d'utilisateur fourni par le téléviseur 1, le serveur 4 peut renvoyer une réponse au téléviseur indiquant qu'aucun contenu numérique n'a été sélectionné ou acheté précédemment par l'utilisateur identifié par l'identifiant d'utilisateur.

La requête d'interrogation émise par le téléviseur 1 peut prendre la forme d'une requête AJAX (XHR) qui est émise de manière transparente pour l'utilisateur, ce qui permet de ne pas perturber une utilisation simultanée du téléviseur 1, pour la visualisation de la chaîne de télévision par exemple au niveau de l'unité d'affichage 13.

La requête d'interrogation peut être émise à une fréquence donnée par l'application HbbTV du téléviseur 1 vers le serveur 4. La fréquence peut être adaptée en fonction du contexte.

Par exemple, par défaut, la requête d'interrogation peut être émise selon une première fréquence, qui peut être de l'ordre d'une requête d'interrogation par minute.

Sur connexion du dispositif de navigation 2 au serveur 4 et sur identification auprès du serveur 4 de l'utilisateur par l'identifiant utilisateur, le serveur 4 peut envoyer une notification de connexion au téléviseur 1 en réponse à une requête d'interrogation comprenant l'identifiant d'utilisateur (alors émise selon la première fréquence). La notification de connexion peut par ailleurs être transmise dans la réponse précédemment décrite afin de minimiser le nombre de messages échangés entre le serveur 4 et le téléviseur 1.

Sur réception de la notification de connexion, le téléviseur 1 peut émettre des requêtes d'interrogation vers le serveur selon une seconde fréquence, plus élevée que la première fréquence, par exemple de l'ordre d'une requête d'interrogation toutes les deux secondes.

En effet, la probabilité que l'utilisateur acquière rapidement un contenu numérique est plus élevée lorsque l'utilisateur est connecté au serveur 4 via le dispositif de navigation 2 que lorsqu'il n'est pas connecté. Ainsi, l'augmentation de la fréquence permet d'améliorer la réactivité du système selon l'invention, de manière pertinente, sans surcharger le réseau.

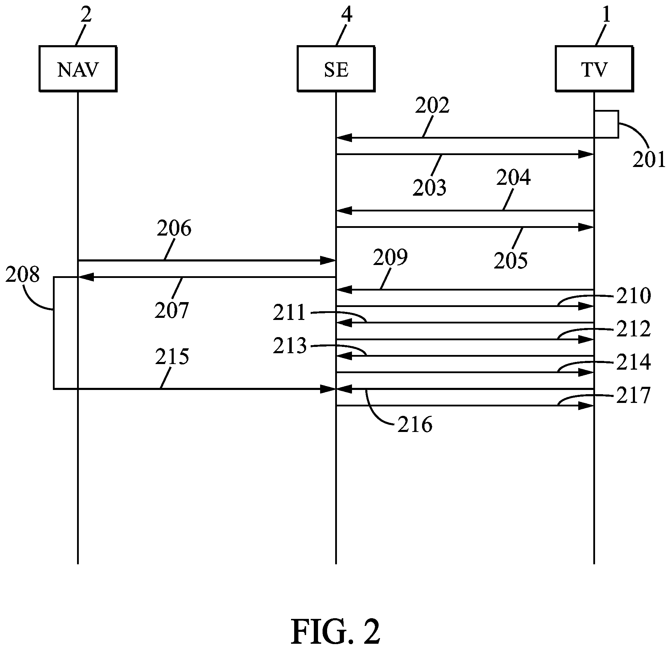

La figure 2 illustre un diagramme d'étapes selon certains modes de réalisation de l'invention, entre le téléviseur 1, le serveur 4 et le dispositif de navigation 2.

A une étape 201, le téléviseur 1 reçoit un flux de données Hertzien comprenant une application HbbTV dédiée à une chaîne de télévision et apte à permettre d'accéder au serveur 4. En variante, le téléviseur reçoit une URL permettant d'accéder à l'application HbbTV via le réseau IP. Cette application HbbTV est alors exécutée dans le téléviseur 1.

A une étape 202, une première requête d'interrogation est envoyée par le téléviseur 1 au serveur 4, la première requête comprenant l'identifiant d'utilisateur. Dans la mesure où, dans cet exemple de réalisation, l'utilisateur n'a pas encore sélectionné de contenu numérique, le serveur 4 renvoie une première réponse à une étape 203 au téléviseur, indiquant qu'aucun contenu numérique ne correspond à l'identifiant d'utilisateur reçu.

A une étape 204, une deuxième requête d'interrogation est envoyée par le téléviseur 1 au serveur 4, la deuxième requête comprenant l'identifiant d'utilisateur. Cette deuxième requête d'interrogation est émise une minute après la première requête (lorsque la première fréquence correspond à une requête d'interrogation toutes les minutes). Aucun contenu numérique n'ayant été requis dans l'intervalle de temps, le serveur 4 envoie une seconde réponse, à une étape 205, indiquant qu'aucun contenu numérique ne correspond à l'identifiant d'utilisateur reçu.

A une étape 206, le dispositif de navigation 2 se connecte auprès du serveur 4, sur le compte TNT2.0 de l'utilisateur par exemple, et le serveur 4 reçoit donc l'identifiant d'utilisateur. En réponse à la connexion, le serveur envoie des pages HTML présentant un ensemble de contenus numériques disponibles, à une étape 207.

A une étape 208, l'utilisateur peut parcourir les contenus numériques disponibles, effectuer une recherche de contenu numérique, et procéder à un paiement sécurisé pour l'achat d'un contenu numérique.

A une étape 209, une troisième requête d'interrogation est envoyée par le téléviseur 1 au serveur 4, la troisième requête comprenant l'identifiant d'utilisateur. La troisième requête est envoyée par le téléviseur une minute après la première requête, dans la mesure où le deuxième message d'erreur ne contenait aucune notification de connexion du dispositif de navigation 2. Aucun contenu numérique n'ayant été requis dans l'intervalle de temps, le serveur 4 envoie une troisième réponse, à une étape 210, indiquant qu'aucun contenu numérique ne correspond à l'identifiant d'utilisateur reçu. Le dispositif de navigation 2 étant connecté au serveur 4, le serveur 4 intègre dans la réponse une notification de connexion du dispositif de navigation 2.

Sur réception de la notification de connexion, le téléviseur 1 émet une quatrième requête d'interrogation vers le serveur 4, la quatrième requête comprenant l'identifiant d'utilisateur, à une étape 211. La quatrième requête est émise deux secondes après la troisième requête (lorsque la seconde fréquence correspond à une requête d'interrogation toutes les deux secondes) dans la mesure où une notification de connexion a été reçue du serveur 4. Aucun contenu numérique n'ayant été requis dans l'intervalle de temps, le serveur 4 envoie une quatrième réponse au téléviseur 1 à une étape 212, indiquant qu'aucun contenu numérique ne correspond à l'identifiant d'utilisateur reçu.

Le téléviseur 1 émet une cinquième requête d'interrogation vers le serveur 4, la cinquième requête comprenant l'identifiant d'utilisateur, à une étape 213. La cinquième requête est émise deux secondes après la quatrième requête dans la mesure où une notification de connexion a été reçue du serveur 4. Aucun contenu numérique n'ayant été requis dans l'intervalle de temps, le serveur 4 envoie une cinquième réponse au téléviseur 1 à une étape 214, indiquant qu'aucun contenu numérique ne correspond à l'identifiant d'utilisateur reçu.

L'étape 208 de consultation des contenus numériques et de paiement s'achève ensuite et l'identifiant de contenu du contenu numérique acheté par l'utilisateur est envoyé à une étape 215 par le dispositif de navigation 2 au serveur 4 et est stocké dans la base de données 42 en association avec l'identifiant d'utilisateur reçu à l'étape 206. Le serveur 4 peut en outre stocker l'URL du contenu numérique identifié en association avec l'identifiant utilisateur afin de faciliter la transmission de l'URL.

Le téléviseur 1 émet une sixième requête d'interrogation vers le serveur 4, la sixième requête comprenant l'identifiant d'utilisateur, à une étape 216. La sixième requête est émise deux secondes après la cinquième requête dans la mesure où une notification de connexion a été reçue du serveur 4.

L'unité de traitement de données 41 détermine alors qu'un identifiant de contenu est associé à l'identifiant d'utilisateur dans la base de données 42. Le serveur 4 envoie ainsi à une étape 217 l'URL du contenu numérique (ou le contenu numérique) identifié au téléviseur, pour un affichage du contenu numérique au niveau de l'unité d'affichage 13.

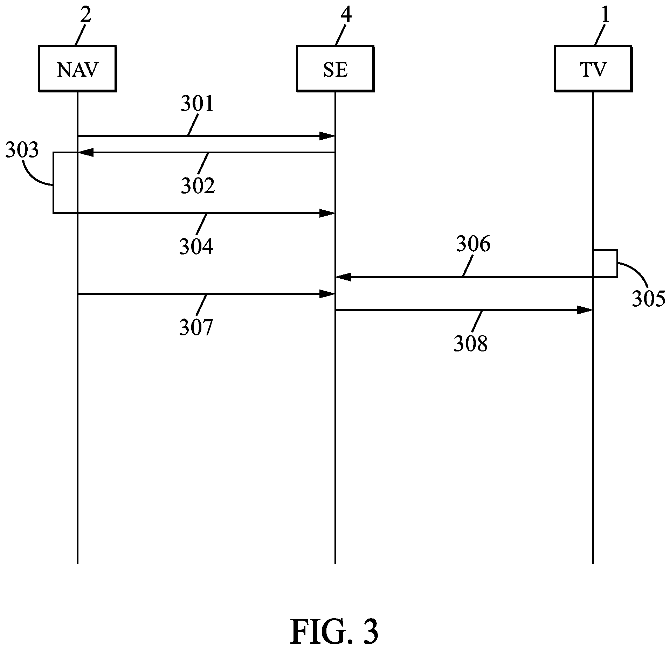

La figure 3 illustre un diagramme d'étapes selon d'autres modes de réalisation de l'invention, entre le téléviseur 1, le serveur 4 et le dispositif de navigation 2.

A une étape 301, le dispositif de navigation 4 se connecte au serveur 4, par exemple, en se connectant à son compte TNT2.0. Le serveur 4 dispose alors de l'identifiant de l'utilisateur qui s'est connecté via le dispositif de navigation 4.

A une étape 302, le serveur 4 envoie des pages HTML au dispositif de navigation 2 présentant un ensemble de contenus numériques disponibles.

Durant une étape 303, l'utilisateur parcourt ou recherche des contenus numériques, et peut procéder à l'achat sécurisé d'un ou plusieurs de ces contenus, via le dispositif de navigation 2.

A une étape 304, lorsqu'au moins un contenu numérique a été sélectionné ou acheté, l'identifiant de contenu de ce contenu numérique est transmis au serveur 4. Le serveur 4 peut alors stocker l'identifiant de contenu en association avec l'identifiant d'utilisateur reçu à l'étape 301, dans la base de données 42. En outre, le serveur 4 peut associer l'URL du contenu numérique sélectionné ou acheté, à l'identifiant d'utilisateur.

Lorsque l'utilisateur accède, via le téléviseur 1, à un flux de données Hertzien d'une chaîne de télévision associée au serveur 4, une application HbbTV transmise avec le flux de données ou accessible dans le réseau IP grâce à une URL transmise dans le flux de données, est exécutée durant une étape 305 dans la base de stockage d'applications 11.

A une étape 306, l'application HbbTV installée envoie une requête d'interrogation au serveur 4, comprenant l'identifiant d'utilisateur de l'utilisateur du téléviseur 1.

L'unité de traitement de données 41 peut alors comparer l'identifiant reçu avec les identifiants d'utilisateur stockés dans la base de données 42 en association avec des identifiants de contenus numériques. Dans la mesure où un contenu a été acheté. Un identifiant de contenu numérique est associé avec l'identifiant d'utilisateur reçu du téléviseur 1. Dans ce mode de réalisation, l'envoi de l'URL du contenu numérique identifié est conditionné par la réception d'une requête de lecture du dispositif de navigation 2.

A une étape 307, le dispositif de navigation 2 envoie au serveur 4 une requête de lecture, la requête de lecture comprenant l'identifiant d'utilisateur ainsi que l'identifiant de contenu.

A une étape 308, le serveur 4 envoie alors l'URL du contenu numérique identifié au téléviseur 1, qui peut donc accéder au contenu numérique pour une visualisation au niveau de l'unité d'affichage 13.

La présente invention permet ainsi avantageusement de mutualiser l'ergonomie liée au parcours, à l'achat et à la recherche de contenus numériques sur des dispositifs de navigation tels qu'un téléphone ou une tablette tactile, avec les capacités d'affichage du contenu numérique de dispositifs d'affichage tels qu'un vidéoprojecteur ou un téléviseur par exemple. La présente invention est par ailleurs applicable à tout type de téléviseurs, ces derniers étant désormais compatibles HbbTV.

## Revendications

1. Procédé de traitement d'un contenu numérique, mis en oeuvre dans un serveur (4) d'un réseau de communication, **caractérisé en ce qu'**il comprend :
- sur réception d'une requête d'un dispositif de navigation (2) comprenant un premier identifiant de contenu et un premier identifiant d'utilisateur, stocker dans une base de données (42) le premier identifiant de contenu en association avec le premier identifiant d'utilisateur ;
- sur réception d'une requête d'interrogation issue d'un dispositif d'affichage (1) et comprenant un identifiant d'utilisateur, comparer ledit identifiant d'utilisateur avec le premier identifiant d'utilisateur ;
- si ledit identifiant d'utilisateur correspond au premier identifiant d'utilisateur, transmettre au dispositif d'affichage le contenu numérique associé au premier identifiant de contenu, pour un affichage du contenu numérique par ledit dispositif d'affichage ;
ladite requête d'interrogation étant reçue régulièrement, par le serveur depuis le dispositif d'affichage, selon une première fréquence donnée ;
dans lequel sur détection par le serveur (4) d'une connexion du dispositif de navigation (2) au serveur via le réseau de communication, le procédé comprend l'envoi au dispositif d'affichage (1) par le serveur d'une notification de connexion du dispositif de navigation,
et dans lequel, sur envoi de la notification de connexion, la requête d'interrogation est reçue selon une seconde fréquence donnée, ladite seconde fréquence étant supérieure à la première fréquence.

2. Procédé selon l'une des revendications précédentes, **caractérisé en ce que** le procédé comprend en outre, sur réception de la requête d'interrogation du dispositif d'affichage (1) et si aucun identifiant de contenu n'est associé à l'identifiant utilisateur, transmettre une réponse au dispositif d'affichage indiquant qu'aucun contenu ne correspond audit identifiant d'utilisateur.

3. Procédé selon l'une des revendications précédentes, **caractérisé en ce que** la transmission au dispositif d'affichage (1) du contenu numérique est conditionnée par la réception du serveur (4) d'une requête de lecture émise par le dispositif de navigation, la requête de lecture comprenant le premier identifiant d'utilisateur et le premier identifiant de contenu.

4. Procédé selon l'une des revendications précédentes, **caractérisé en ce que** le dispositif d'affichage (1) est un téléviseur.

5. Programme d'ordinateur comportant des instructions pour la mise en oeuvre du procédé selon l'une des revendications 1 à 4 lorsque ce programme est exécuté par un processeur.

6. Serveur d'un réseau de communication pour le traitement d'un contenu numérique, **caractérisé en ce qu'**il comprend :
- une unité de réception d'une requête (40) d'un dispositif de navigation (2) comprenant un premier identifiant de contenu et un premier identifiant d'utilisateur ;
- une base de données (42) pour stocker le premier identifiant de contenu en association avec le premier identifiant d'utilisateur ;
- une unité de réception d'une requête d'interrogation (40) d'un dispositif d'affichage (1) comprenant un identifiant d'utilisateur;
- une unité de comparaison (41) pour comparer ledit identifiant d'utilisateur avec le premier utilisateur ;
- une unité de transmission (40) pour transmettre le contenu numérique associé au premier identifiant de contenu, pour un affichage du contenu numérique sur ledit dispositif d'affichage, si ledit identifiant d'utilisateur correspond au premier identifiant d'utilisateur ;
ladite requête d'interrogation étant reçue régulièrement, par le serveur depuis le dispositif d'affichage, selon une première fréquence donnée ;
sur détection par le serveur (4) d'une connexion du dispositif de navigation (2) au serveur via le réseau de communication, l'unité de transmission est configurée pour transmettre au dispositif d'affichage (1) une notification de connexion du dispositif de navigation, et, sur envoi de la notification de connexion, la requête d'interrogation est reçue selon une seconde fréquence donnée, ladite seconde fréquence étant supérieure à la première fréquence.

7. Dispositif pour requérir un contenu numérique auprès d'un serveur d'un réseau de communication, **caractérisé en ce que** le dispositif est compatible HbbTV et **en ce qu'**il comprend :
- une unité de réception (10) d'un flux de données d'un réseau hertzien comprenant une application HbbTV associée à un serveur ou comprenant une URL permettant d'accéder à ladite application HbbTV via un réseau IP ;
- une unité d'exécution (11) de ladite application HbbTV ;
- une unité d'émission (12) régulière selon une première fréquence donnée d'une requête d'interrogation vers le serveur ladite requête d'interrogation comprenant un identifiant d'utilisateur ;
- une unité de réception (12) d'un contenu numérique associé dans le serveur avec ledit identifiant d'utilisateur ;
dans lequel l'unité de réception du contenu numérique est en outre configurée pour recevoir, depuis le serveur, une notification de connexion du dispositif de navigation, et, dans lequel, sur réception de la notification de connexion, l'unité d'émission est configurée pour émettre selon une seconde fréquence donnée, ladite seconde fréquence étant supérieure à la première fréquence.

8. Système pour le traitement d'un contenu numérique, **caractérisé en ce qu'**il comprend un dispositif selon la revendication 7 et un serveur selon la revendication 6.

## Patentansprüche

1. Verfahren zum Behandeln eines digitalen Inhalts, durchgeführt in einem Server (4) eines Kommunikations-Netzwerks, **dadurch gekennzeichnet, dass** es umfasst:
- bei Empfang einer Anfrage von einer Navigationsvorrichtung (2), welche eine erste Inhaltekennung und eine erste Benutzerkennung umfasst, Speichern der ersten Inhaltekennung im Zusammenhang mit der ersten Benutzerkennung in einer Datenbank (42);
- bei Empfang einer Abfrageanfrage, welche von einer Anzeigevorrichtung (1) ausgegeben wird und eine Benutzerkennung umfasst, Vergleichen der Benutzerkennung mit der ersten Benutzerkennung;
- wenn die Benutzerkennung der ersten Benutzerkennung entspricht, Übertragen des digitalen Inhalts, welcher der ersten Inhaltekennung zugeordnet ist, zu der Anzeigevorrichtung für ein Anzeigen des digitalen Inhalts durch die Anzeigevorrichtung;
wobei die Abfrageanfrage regelmäßig durch den Server von der Anzeigevorrichtung gemäß einer ersten gegebenen Frequenz empfangen wird; wobei bei Detektion einer Verbindung der Navigationsvorrichtung (2) zu dem Server durch das Kommunikations-Netzwerk durch den Server (4), das Verfahren das Senden einer Verbindungsbenachrichtigung der Navigationsvorrichtung an die Anzeigevorrichtung (1) durch den Server umfasst, und wobei beim Senden der Verbindungsbenachrichtigung die Abfrageanfrage gemäß einer zweiten gegebenen Frequenz empfangen wird, wobei die zweite Frequenz größer als die erste Frequenz ist.

2. Verfahren nach einem der vorhergehenden Ansprüche, **dadurch gekennzeichnet, dass** das Verfahren ferner beim Empfang der Abfrageanfrage der Anzeigevorrichtung (1) und wenn keine Inhaltekennung der Benutzerkennung zugeordnet ist, ein Übertragen einer Antwort an die Anzeigevorrichtung umfasst, welche anzeigt, dass kein Inhalt der Benutzerkennung entspricht.

3. Verfahren nach einem der vorhergehenden Ansprüche, **dadurch gekennzeichnet, dass** die Übertragung des digitalen Inhalts an die Anzeigevorrichtung (1) durch den Empfang einer Leseanfrage durch den Server (4) bedingt wird, welche von der Navigationsvorrichtung ausgegeben wird, wobei die Leseanfrage die erste Benutzerkennung und die erste Inhaltekennung umfasst.

4. Verfahren nach einem der vorhergehenden Ansprüche, **dadurch gekennzeichnet, dass** die Anzeigevorrichtung (1) ein Fernsehapparat ist.

5. Computerprogramm, umfassend Anweisungen zum Durchführen des Verfahrens nach einem der Ansprüche 1 bis 4, wenn das Programm von einem Prozessor ausgeführt wird.

6. Server eines Kommunikations-Netzwerks zum Behandeln eines digitalen Inhalts, **dadurch gekennzeichnet, dass** er umfasst:
- eine Einheit zum Empfangen einer Anfrage (40) von einer Navigationsvorrichtung (2), welche eine erste Inhaltekennung und eine erste Benutzerkennung umfasst;
- eine Datenbank (42) zum Speichern der ersten Inhaltekennung im Zusammenhang mit der ersten Benutzerkennung;
- eine Empfangseinheit für eine Abfrageanfrage (40) von einer Anzeigevorrichtung (1), welche eine Benutzerkennung umfasst;
- eine Vergleichseinheit (41) zum Vergleichen der Benutzerkennung mit dem ersten Benutzer;
- eine Übertragungseinheit (40) zum Übertragen des digitalen Inhalts, welcher der ersten Inhaltekennung zugeordnet ist, für ein Anzeigen des digitalen Inhalts an der Anzeigevorrichtung, wenn die Benutzerkennung der ersten Benutzerkennung entspricht;
wobei die Abfrageanfrage regelmäßig durch den Server von der Anzeigevorrichtung gemäß einer ersten gegebenen Frequenz erhalten wird;
bei Detektion einer Verbindung der Navigationsvorrichtung (2) mit dem Server über das Kommunikations-Netzwerk durch den Server (4), die Übertragungseinheit dazu eingerichtet ist, an die Anzeigevorrichtung (1) eine Verbindungsbenachrichtigung der Navigationsvorrichtung zu übertragen, und beim Senden der Verbindungsbenachrichtigung die Abfrageanfrage gemäß einer zweiten gegebenen Frequenz empfangen wird, wobei die zweite Frequenz größer als die erste Frequenz ist.

7. Vorrichtung zum Anfragen eines digitalen Inhalts bei einem Server eines Kommunikations-Netzwerks, **dadurch gekennzeichnet, dass** die Vorrichtung HbbTV-kompatibel ist und dass sie umfasst:
- eine Empfangseinheit (10) für einen Datenstrom eines Hertz'schen Netzwerks, umfassend eine HbbTV-Anwendung, welche einem Server zugeordnet ist oder eine URL umfasst, welche es erlaubt, auf die HbbTV-Anwendung mittels eines IP-Netzwerks zuzugreifen;
- eine Ausführungseinheit (11) der HbbTV-Anwendung;
- eine gemäß einer ersten gegebenen Frequenz regelmäßige Sendeeinheit (12) einer Abfrageanfrage zu dem Server, wobei die Abfrageanfrage eine Benutzerkennung umfasst;
- eine Empfangseinheit (12) für einen digitalen Inhalt, welcher in dem Server der Benutzerkennung zugeordnet ist;
wobei die Empfangseinheit für den digitalen Inhalt ferner dazu eingerichtet ist, von dem Server eine Verbindungsbenachrichtigung der Navigationsvorrichtung zu empfangen, und wobei bei Empfang der Verbindungsbenachrichtigung die Sendeeinheit dazu eingerichtet ist, gemäß einer zweiten gegebenen Frequenz zu senden, wobei die zweite Frequenz größer als die erste Frequenz ist.

8. System zum Behandeln eines digitalen Inhalts, **dadurch gekennzeichnet, dass** es eine Vorrichtung nach Anspruch 7 und einen Server nach Anspruch 6 umfasst.

## Claims

1. Method for processing digital content, implemented in a server (4) of a communication network, **characterised in that** it comprises:
- upon reception of a request from a navigation device (2) comprising a first content identifier and a first user identifier, storing, in a database (42), the first content identifier in association with the first user identifier;
- upon reception of an interrogation request coming from a display device (1) and comprising a user identifier, comparing said user identifier to the first user identifier;
- if said user identifier corresponds to the first user identifier, transmitting, to the display device, the digital content associated with the first content identifier, for a display of the digital content by said display device;
said interrogation request being received regularly, by the server from the display device, according to a first given frequency;
wherein upon detection by the server (4) of a connection of the navigation device (2) to the server via the communication network, the method comprises the sending to the display device (1) by the server of a notification of connection of the navigation device,
and wherein, upon sending of the connection notification, the interrogation request is received according to a second given frequency, said second frequency being greater than the first frequency.

2. Method according to one of the previous claims, **characterised in that** the method further comprises, upon reception of the interrogation request from the display device (1) and if no content identifier is associated with the user identifier, transmitting a response to the display device indicating that no content corresponds to said user identifier.

3. Method according to one of the previous claims, **characterised in that** the transmission of the digital content to the display device (1) is conditioned by the reception from the server (4) of a reading request emitted by the navigation device, the reading request comprising the first user identifier and the first content identifier.

4. Method according to one of the previous claims, **characterised in that** the display device (1) is a television.

5. Computer program comprising instructions for the implementation of the method according to one of claims 1 to 4, when this program is executed by a processor.

6. Server of a communication network for the processing of digital content, **characterised in that** it comprises:
- a unit for reception of a request (40) from a navigation device (2) comprising a first content identifier and a first user identifier;
- a database (42) for storing the first content identifier in association with the first user identifier;
- a unit for reception of an interrogation request (40) from a display device (1) comprising a user identifier;
- a comparison unit (41) for comparing said user identifier to the first user;
- a transmission unit (40) for transmitting the digital content associated with the first content identifier, for display of the digital content on said display device, if said user identifier corresponds to the first user identifier;
said interrogation request being received regularly, by the server from the display device, according to a first given frequency;
upon detection by the server (4) of a connection of the navigation device (2) to the server via the communication network, the transmission unit is configured to transmit to the display device (1) a notification of connection of the navigation device, and, upon sending of the connection notification, the interrogation request is received according to a second given frequency, said second frequency being greater than the first frequency.

7. Device for requesting digital content from a server of a communication network, **characterised in that** the device is HbbTV compatible and **in that** it comprises:
- a unit (10) for reception of a stream of data from a wireless network comprising an HbbTV application associated with a server or comprising a URL allowing to access said HbbTV application via an IP network;
- a unit (11) for execution of said HbbTV application;
- a unit (12) for regular emission according to a first given frequency of an interrogation request to the server said interrogation request comprising a user identifier;
- a unit (12) for reception of digital content associated in the server with said user identifier;
wherein the unit for reception of the digital content is further configured to receive, from the server, a notification of connection of the navigation device, and, wherein, upon reception of the connection notification, the emission unit is configured to emit according to a second given frequency, said second frequency being greater than the first frequency.

8. System for the processing of digital content, **characterised in that** it comprises a device according to claim 7 and a server according to claim 6.
